# EUROPÄISCHE PATENTANMELDUNG

(11) **EP 3 298 878 A1**
(43) Veröffentlichungstag der Anmeldung: **28.03.2018**
(21) Anmeldenummer: 16189937.2
(22) Anmeldetag: 21.09.2016
(51) Int. Cl.: A01D 46/00, A01D 46/28

(54) **VORRICHTUNG FÜR DIE ERNTE VON BEEREN**

(71) Anmelder: Trako, Dzenan, 71300 Visoko (BA); Trako, Memnun, 71300 Visoko (BA)
(72) Erfinder: Trako, Dzenan, 71300 Visoko (BA); Trako, Memnun, 71300 Visoko (BA)
(74) Vertreter: BOVARD AG

(57) **Zusammenfassung**

Die vorliegende Erfindung bezieht sich auf eine Vorrichtung für die Ernte von Beeren (100), umfassend Mittel (5, 6, 7) zum Abtrennen der Beeren von Beerenpflanzen (M), Mittel (23) zum Auffangen der abgetrennten Beeren und Mittel (52) zum Transportieren der Beeren bis zu einem Aufbewahrungsmittel, in welcher Mittel zum Abtrennen der Beeren von Beerenpflanzen einen Luftstromgenerator (5), einen Luftstossgenerator (6) und ein Luftdistributionssystem (7) umfasst, wobei der durch den Luftstromgenerator (5) generierte kontinuierliche Luftstrom mittels des Luftstossgenerators (6) in einen intermittierenden Luftstrom umwandelbar ist, und wobei dieser intermittierende Luftstrom mittels des Luftdistributionssystems (7) derart verteilbar ist, dass die Beeren über die ganze Höhe der Beerenpflanze (M) dem intermittierenden Luftstrom unterziehbar sind.

## Beschreibung

### Technisches Gebiet der Erfindung

Die vorliegende Erfindung bezieht sich auf eine Vorrichtung für die Ernte von Beeren, insbesondere von Himbeeren oder Brombeeren, aber auch von anderen Beerensorten, zum Beispiel von Himbeeren oder Johannisbeeren. Die vorliegende Erfindung bezieht sich insbesondere auf eine Vorrichtung für die Ernte von Beeren, welche eine automatische, jedoch trotzdem schonende Ernte von reifen Beeren ermöglicht.

### Stand der Technik

Himbeeren und Brombeeren, die entgegen ihrem Namen botanisch gesehen eigentlich gar keine Beeren, sondern so genannte Sammelsteinfrüchte sind, sind zusammen mit den Johannisbeeren und Heidelbeeren die am meisten angepflanzten Gartenfrüchte. Allerdings werden sie vermehrt auch als Industriepflanzen angebaut. Diese beiden Arten wachsen an Sträuchern, welche im Normalfall eine Wuchshöhe von etwa 1½ Meter erreichen, wobei je nach Sorte auch etwas kleinere oder grössere Sträucher möglich sind. Bei industriell angebauten Himbeeren bzw. Brombeeren werden die Pflanzen in Reihen angebaut, mit einen Abstand zwischen den einzelnen Pflanzen, der idealerweise etwa 20 bis 50 Zentimeter beträgt. Zwischen den einzelnen Pflanzreihenreihen wird grundsätzlich ein Abstand von etwa 2½ Meter gelassen.

Sowohl die Himbeeren als auch die Brombeeren werden meistens von Hand geerntet. Dabei werden die einzelnen reifen Früchte von Hand von ihrer Auflage getrennt und abgelegt. Diese Erntemethode, obwohl sehr schonend für die reifen Früchte, ist mit sehr viel Aufwand verbunden. Auch ist es bei grösseren Parzellen manchmal nicht möglich, die Früchte genügend schnell zu ernten, so dass manchmal die optimale Reife gewisser Früchte verpasst wird.

Bekannt sind auch Vorrichtungen, mittels welcher Himbeeren oder Brombeeren auch automatisch geerntet werden. Diese basieren in der Regel auf einem "Kammsystem", bei welchem kammartige Elemente über die Sträucher gezogen werden, wobei die Früchte von den Pflanzen getrennt werden, beziehungsweise auf einem "Schütteleffekt", bei welchem die Sträucher dank besonderen Einrichtungen geschüttelt werden, so dass die reifen Früchte von der Pflanze abfallen. Die maschinelle Erntemethode ist selbstverständlich viel effizienter als die Handlese, jedoch hat sie den Nachteil, dass auch unreife Früchte geerntet werden können. Zudem können Sträucher durch die Kamm- bzw. die Schüttelelemente beschädigt werden. Ein weiterer Nachteil der bekannten Erntevorrichtungen ist die Tatsache, dass sie in der Regel nur beim ebenen oder nur wenig steilen Lagen verwendet werden können. Ganz steile Lagen erlauben zurzeit keine maschinelle Lese, weswegen an solchen Stellen bisher nur eine traditionelle Handernte möglich war.

### Zusammenfassung der Erfindung

Es ist daher eine Aufgabe der vorliegenden Erfindung, diese Nachteile des Standes der Technik zu überwinden und eine neue Vorrichtung für die Ernte von Beeren vorzuschlagen, bei welcher die erwähnten Mängel beseitigt sind.

Gemäss der vorliegenden Erfindung werden diese Ziele vor allem durch die Elemente desunabhängigen Anspruchs erreicht. Weitere vorteilhafte Ausführungsformen gehen ausserdem aus den abhängigen Ansprüchen und der Beschreibung hervor.

Insbesondere werden die Ziele der Erfindung dadurch erreicht, dass in einer Vorrichtung für die Ernte von Beeren, umfassend Mittel zum Abtrennen der Beeren von Beerenpflanzen, Mittel zum Auffangen der abgetrennten Beeren und Mittel zum Transportieren der Beeren bis zu einem Aufbewahrungsmittel, das Mittel zum Abtrennen der Beeren von Beerenpflanzen einen Luftstromgenerator, einen Luftstossgenerator und ein Luftdistributionssystem umfasst, wobei der durch den Luftstromgenerator generierte kontinuierliche Luftstrom mittels des Luftstossgenerators in einen intermittierenden Luftstrom umwandelbar ist, und wobei dieser intermittierende Luftstrom mittels des Luftdistributionssystems derart verteilbar ist, dass die Beeren über die ganze Höhe der Beerenpflanze dem intermittierenden Luftstrom unterziehbar sind.

Dank einer solchen Struktur der erfindungsgemässen Vorrichtung für die Ernte von Beeren können reife Beeren durch gezielte Luftstösse geerntet werden. Diese gezielten Luftstösse (bzw. der intermittierende Luftstrom) kann an der Beerenpflanze sanfte Vibrationen auslösen, durch welche die reifen Beeren von der Pflanze getrennt und dann durch die Auffangmittel und Transportmittel bis zu den Mitteln für die Aufbewahrung (z.B. Früchtekisten) befördert werden können. Hierbei werden nicht nur die Beeren, sondern insbesondere auch die Pflanze trotz einer hohen Effizienz geschont.

### Kurze Beschreibung der Zeichnungen

Nachfolgend werden die Ausführungsvarianten der vorliegenden Erfindung anhand von Beispielen beschrieben. Die Beispiele der Ausführungen werden durch folgende beigelegte Figuren illustriert:
Figur 1 zeigt eine perspektivische schematische Darstellung einer erfindungsgemässen Vorrichtung für die Ernte von Beeren, welche durch einen Traktor gezogen wird.
Figur 2 zeigt eine perspektivische schematische Darstellung der erfindungsgemässen Vorrichtung für die Ernte von Beeren, in einer Ansicht von hinten.
Figur 3 zeigt eine schematische Darstellung der erfindungsgemässen Vorrichtung für die Ernte von Beeren, in einer Seitenansicht.
Figur 4 zeigt, in einer vergrösserten Ansicht, eine perspektivische schematische Darstellung des unteren Teils der erfindungsgemässen Vorrichtung für die Ernte von Beeren.
Figur 5, mit beiden Unterfiguren 5A und 5B, zeigt eine schematische Darstellung der erfindungsgemässen Vorrichtung für die Ernte von Beeren in einer Ansicht von hinten, wobei darin die Ausnivellierung der Vorrichtung in Abhängigkeit von der Ausrichtung der Unterlage schematisch angedeutet ist.
Figur 6 zeigt, in einer vergrösserten Ansicht, eine perspektivische schematische Darstellung eines Teils des Mechanismus für die Ausnivellierung in der erfindungsgemässen Vorrichtung für die Ernte von Beeren.
Figur 7 zeigt, in einer vergrösserten Ansicht, eine perspektivische schematische Darstellung eines anderen Teils des Mechanismus für die Ausnivellierung in der erfindungsgemässen Vorrichtung für die Ernte von Beeren.
Figur 8 zeigt, in einer vergrösserten Ansicht, eine perspektivische schematische Darstellung eines dritten Teils des Mechanismus für die Ausnivellierung in der erfindungsgemässen Vorrichtung für die Ernte von Beeren.
Figur 9 zeigt eine perspektivische schematische Darstellung des Luftdistributionssystems in der erfindungsgemässen Vorrichtung für die Ernte von Beeren.
Figur 10, mit beiden Unterfiguren 10A und 10B, zeigt eine perspektivische schematische Darstellung des Luftstossgenerators in der erfindungsgemässen Vorrichtung für die Ernte von Beeren, einmal mit dem Gehäuse und einmal ohne das Gehäuse.

### Bevorzugte Ausführungsformen der Erfindung

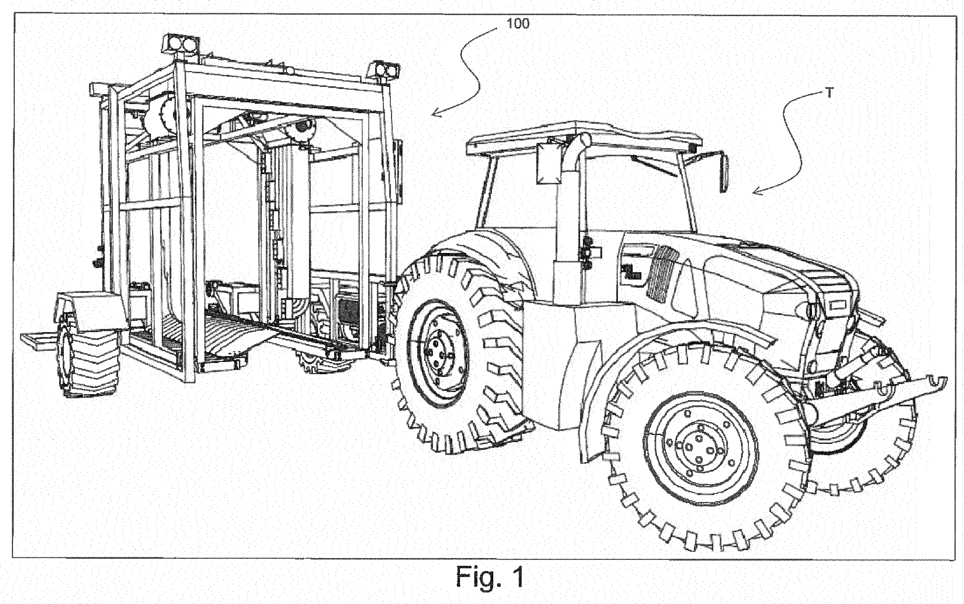

In Figur 1 wird schematisch eine erfindungsgemässe Vorrichtung für die Ernte von Beeren 100 illustriert, wobei sie durch einen Traktor 1 gezogen wird. An dieser Stelle muss präzisiert werden, dass die erfindungsgemässe Vorrichtung für die Ernte von Beeren 100 im Wesentlichen immer durch einen Traktor oder ein ähnliches Zugfahrzeug gezogen wird. Allerdings ist nicht undenkbar, dass auch eine Vorrichtung für die Ernte von Beeren mit den Merkmalen der vorliegenden Erfindung konstruiert werden kann, welche aber einen eingebauten Antrieb umfasst, und deshalb nicht durch externe Zugfahrzeuge gezogen werden muss. Auch eine solche angepasste Vorrichtung für die Ernte von Beeren ist Teil dieser Erfindung und soll in der nachfolgenden Beschreibung ebenfalls miteingeschlossen werden.

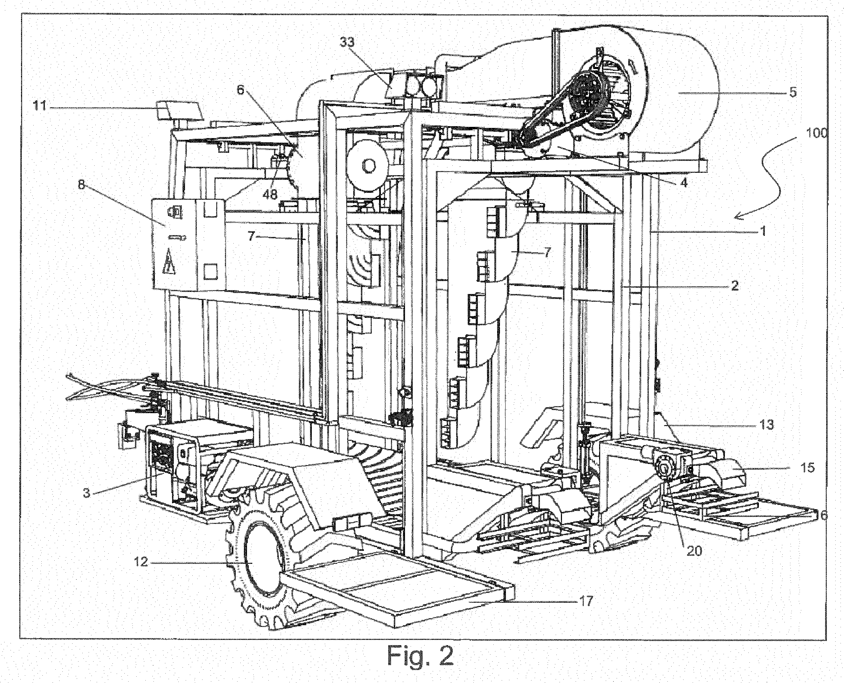

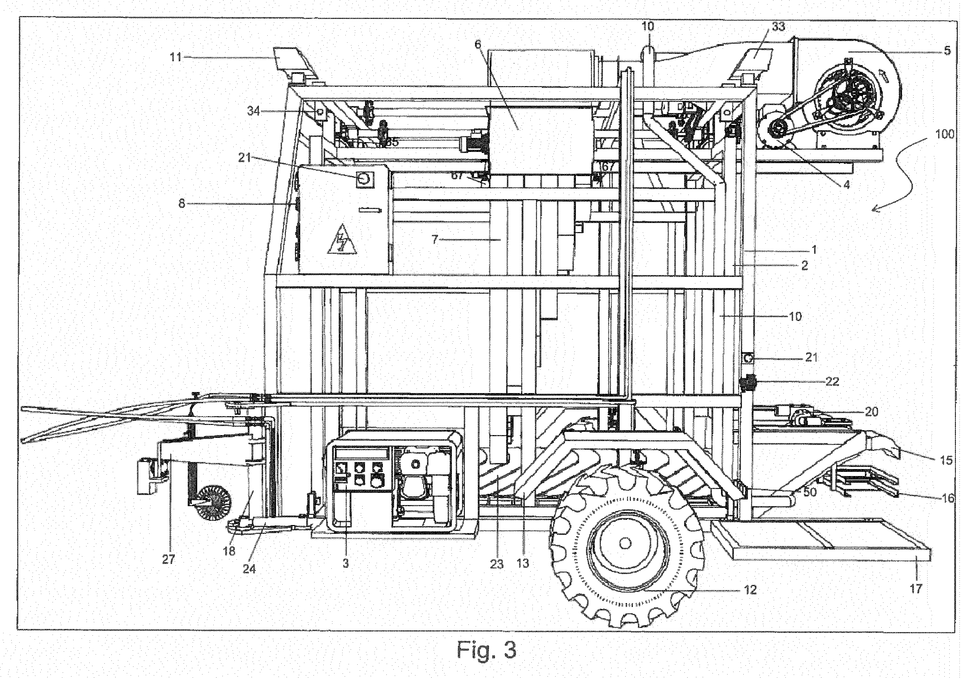

Die erfindungsgemässe Vorrichtung für die Ernte von Beeren 100 wird detaillierter in Figur 2 und Figur 3 illustriert. Die Vorrichtung für die Ernte von Beeren 100 umfasst ein Chassis, der aus einem unbeweglichem Teil 1 und einem beweglichen Teil 2 besteht. Die Funktion dieser beiden Chassis-Teile 1, 2 wird später detaillierter erläutert. Abgestützt wird die Vorrichtung für die Ernte von Beeren 100 an zwei Rädern 12, welche jeweils eine Radabdeckung 13 mit Reflektoren 50 für die Verkehrssicherheit aufweisen können. Selbstverständlich sind auch Varianten der Erfindung denkbar, in welchen mehr als zwei Räder vorgesehen sind, oder welche keine Radabdeckungen haben. Auch wäre es möglich, statt Rädern auch ganz andere Abstützelemente vorzusehen.

Die Höhe der Vorrichtung für die erfindungsgemässe Ernte von Beeren 100 ist so gewählt, dass sie problemlos mit Pflanzen bis zu einer Höhe von 2 Meter und 20 Zentimetern umgehen kann. Anpassung der Höhe wäre jedoch durchaus möglich.

Zur Verbindung der erfindungsgemässen Vorrichtung für die Ernte von Beeren 100 mit dem Zugfahrzeug wird eine gewöhnliche Anhängerkupplung 27 verwendet, so dass für die Verwendung der erfindungsgemässen Vorrichtung für die Ernte von Beeren 100 mit einem gewöhnlichen Traktor keine besonderen Elemente verwendet werden müssen. Die Anhängerkupplung 27 kann durch einen Hydraulikzylinder 24 um ihre Vertikalachse 18 geschwenkt werden, in Abhängigkeit davon, ob die erfindungsgemässe Vorrichtung für die Ernte von Beeren 100 auf der Strasse zirkuliert oder im Beerengarten verwendet wird. Anstelle des Hydraulikzylinders 24 ist allerdings auch eine manuelle Verstellung denkbar.

Die erfindungsgemässe Vorrichtung für die Ernte von Beeren 100 umfasst einen Antrieb 3, mittels welchem die aktiven Elemente der Vorrichtung für die Ernte von Beeren 100 angetrieben werden. Das kann insbesondere ein "gewöhnlicher" Verbrennungsmotor sein, aber andere Ausführungsformen, z.B. mit einem Elektromotor, sind durchaus auch denkbar.

Die erfindungsgemässe Vorrichtung für die Ernte von Beeren 100 funktioniert auf dem Prinzip der Luftstösse, welche durch das Luftdistributionssystem 7 an die Beerensträucher geleitet wird, und welche die reifen Beeren von den Pflanzen trennen, so dass diese dann aufgefangen und in die Kisten gelagert werden können. Hierzu ist ein Ventilator 5 vorgesehen, welcher einen Luftstrom generiert, und welcher durch einen entsprechenden Antrieb 4 angetrieben wird. Dieser Ventilator-Antrieb 4 kann beispielsweise ein Elektromotor oder ein Hydraulikantrieb sein, aber andere Varianten sind durchaus denkbar. Der Aufbau des Luftdistributionssystems 7 wird etwas später näher beschrieben. Bevor die Luft jedoch durch das Luftdistributionssystem 7 verteilt und zum Abblasen der reifen Früchte von den Sträuchern verwendet wird, wird der vom Ventilator 5 generierte Luftstrom so "portioniert", dass er nicht als kontinuierlicher Strom, sondern als eine Art "intermittierenden Luftstrom" aufbereitet wird. Die so generierten Luftstösse ermöglichen ein besseres Abblasen der Früchte von den Sträuchern im Vergleich zu einem kontinuierlichen Luftstrom. Der Aufbau des Luftstossgenerators 6, der durch einen eigenen Antrieb 32 angetrieben wird, wird etwas später näher beschrieben.

In Figur 2 und Figur 3 ebenfalls sichtbar ist ein Steuerungskasten 8, mittels welchem die verschiedenen Elemente der Vorrichtung für die Ernte von Beeren 100 gesteuert (d.h. insbesondere eingeschaltet und ausgeschaltet, aber auch parametriert) werden können. Diese Steuerung kann aber auch anderswo geregelt werden, zum Beispiel auch über eine elektronische Schnittstelle von einem Computer aus. Der Steuerungskasten 8 kann einen Nottaster 21 aufweisen, mittels welchem der Betrieb der erfindungsgemässen Vorrichtung für die Ernte von Beeren 100 augenblicklich unterbrochen werden kann. Bei der Parametrierung ist es insbesondere möglich, die Menge der Luft im Luftstrom anzupassen, welcher durch den Ventilator 5 produziert wird. Ebenfalls parametriert bzw. eingestellt werden kann die Frequenz und/oder die Stärke der Luftstösse, welche durch den Luftstossgenerator 6 produziert werden. Dank diesen Parametern kann insbesondere gewährleistet werden, dass die Vorrichtung für die Ernte von Beeren 100 jeweils eine optimale Einstellung für die Ernte von verschiedenen Beerensorten aufweist, da sich die Eigenschaften von verschiedenen Pflanzen unterscheiden. Zudem kann dank dieser Parametrierung der Tatsache Rechnung getragen werden, dass es unter Umständen notwendig sein kann, auch Früchte verschiedenen Reifegrades zu ernten, welche sich ebenfalls unterschiedlich verhalten. Dies zusammen ermöglicht eine vielfältig einsetzbare Vorrichtung 100.

Auch vorgesehen werden können Leuchten 11, 33, welche dazu verwendet werden können, die Umgebung auszuleuchten, damit die erfindungsgemässe Vorrichtung für die Ernte von Beeren 100 auch nachts verwendet werden kann. Zudem können diese Leuchten 11, 33 auch bei der Zirkulation im Strassenverkehr für die Sicherheit sorgen.

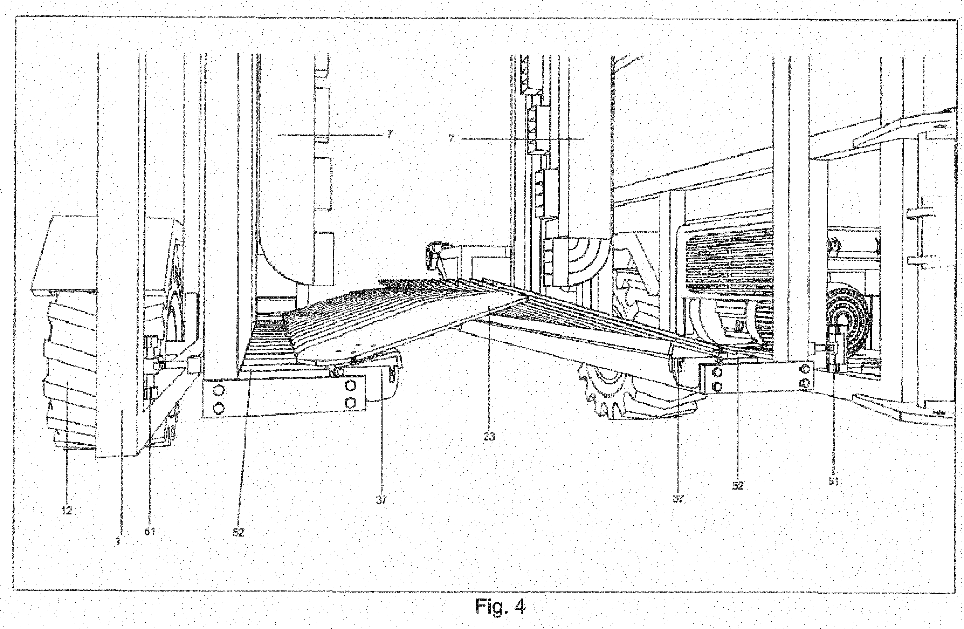

Im hinteren Teil der erfindungsgemässen Vorrichtung für die Ernte von Beeren 100 sind ein Träger 16 für die Gebinde (Kisten) zur Aufbewahrung von geernteten Früchten und ein Blassystem 15 vorgesehen. Die geernteten Früchte werden über Auffangelemente 23 und ein Transportsystem 52 (illustriert in Figur 4) zu diesen Gebinden transportiert, wo sie dann aufbewahrt werden. Das Blassystem 15, welches über eine Röhre 10 mit der Luft vom Ventilator 5 versorgt wird, dient dazu, die möglicherweise zusammen mit den geernteten Früchten gesammelten Blätter von der Pflanze wegzublasen, bevor diese jeweils in die Gebinde eingeführt werden. Nach Bedarf kann die Menge an Luft, welche in das Blassystem 15 eingespeist wird, geregelt werden. Ausserdem ist im hinteren Teil der Vorrichtung für die Ernte von Beeren 100 eine Plattform 17 für den Operator der Vorrichtung 100 vorgesehen, wo dieser während des Einsatzes der Vorrichtung auf der Plattform stehen und die Funktion der Vorrichtung 100 kontrollieren bzw. steuern kann. Diese Plattform 19 kann nach Bedarf eingeklappt werden, wenn sie nicht verwendet wird (z.B. in der Zirkulation im Strassenverkehr).

In Figur 4 wird das untere Teil der erfindungsgemässen Vorrichtung für die Ernte von Beeren 100 mit den Auffangelementen 23 dargestellt. Diese Auffangelemente 23 können beispielsweise aus Plexiglas oder einem anderen ähnlichen Material bestehen und sind so gefedert, dass sie sich lateral einfach bewegen können. Ihre Steigung kann jeweils mittels eines Einstellmechanismus 37 eingestellt werden. Im Betrieb werden diese Auffangelemente 23 so eingestellt, dass sie die Pflanzenbäume gut umfassen und gewissermassen einen "Boden" unter den Sträuchern bilden. Dank der lateralen Beweglichkeit können sich diese Auffangelemente 23 während des Bewegens der erfindungsgemässen Vorrichtung für die Ernte von Beeren 100 jeweils an die neue Konfiguration anpassen, so dass der Raum unter den Pflanzen immer durch die Auffangelemente 23 gedeckt wird. Damit kann gewährleistet werden, dass Früchte, welche durch die Luftstösse abgeblassen werden, nicht an den Boden fallen, sondern durch diese Auffangelemente 23 aufgefangen und an die Transportsysteme 52 weitergegeben werden. Danach werden diese geernteten Früchte, wie schon oben erwähnt, an die Gebinde weitergeleitet und aufbewahrt.

Damit eine optimale Ausrichtung der Auffangelemente 23 auch bei nicht völlig ebenen Böden garantiert werden kann, umfasst die erfindungsgemässe Vorrichtung für die Ernte von Beeren 100 ein Ausnivellierungssystem, das nun etwas näher beschrieben wird. Mit anderen Worten umfasst die erfindungsgemässe Vorrichtung für die Ernte von Beeren 100 ein Ausnivellierungssystem, um die relative Position des Luftdistributionssystems 7 gegenüber der Pflanze M konstant halten zu können.

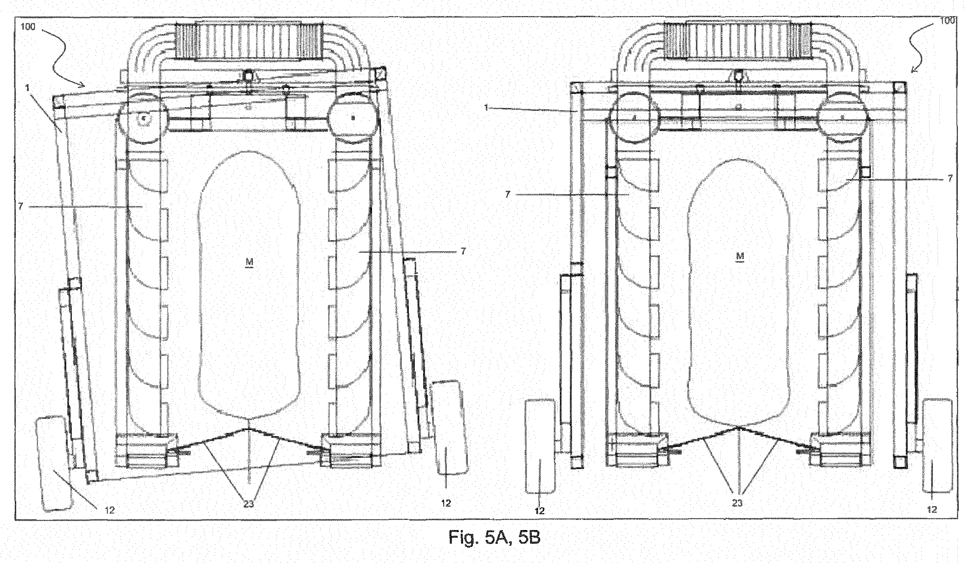

Wie in Figuren 5A und 5B gesehen werden kann, können sich die Elemente der Vorrichtung für die Ernte von Beeren 100 so bewegen, dass sie den Beerenstrauch M immer optimal umfassen können. Auf diese Weise kann garantiert werden, dass die Luftstösse die Sträucher immer regelmässig erreichen (und nicht etwa, dass eine Seite einem viel stärkeren Luftstrom als die andere Seite ausgesetzt wird) und zudem können Schäden am Strauch durch zu hohe Auffangelemente 23 auch verhindert werden.

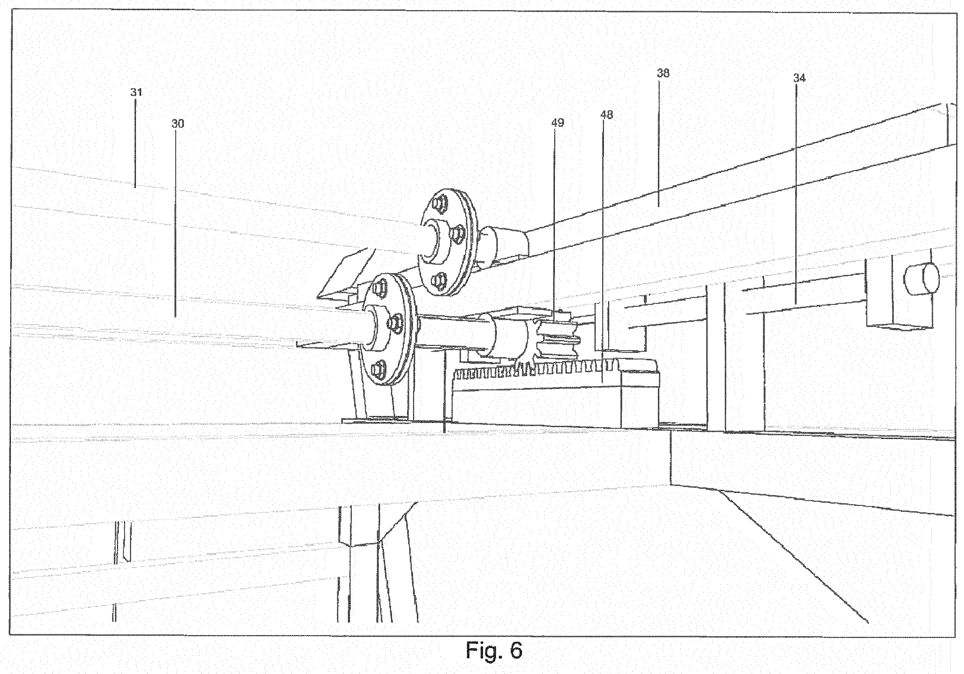

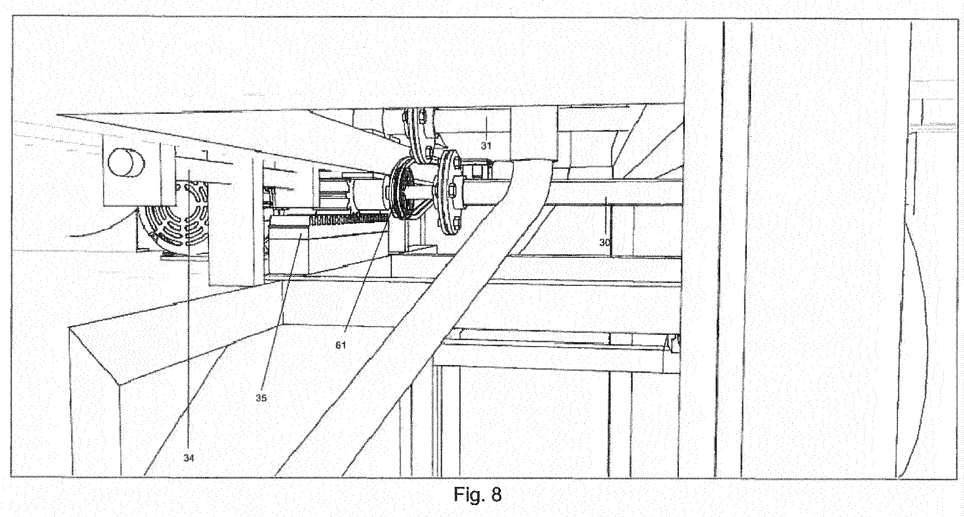

Figuren 6 bis 8 zeigen den Aufbau des Ausnivellierungssystems. Dieses umfasst auf jeder Seite jeweils eine Zahnleiste 35, 48, welche mit dem Chassis der Vorrichtung 100 verbunden sind, in welche die Zahnräder 46, 49 eingreifen. Bei der Drehung dieser Zahnräder 46, 49 können sie die jeweils die Zahnleisten 35, 48 so bewegen, welche dann diese Schubbewegung an das Chassis der Vorrichtung 100 übertragen, wodurch die Ausrichtung des Chassis angepasst werden kann. Zwei Kardanwellen 30, 31 sind ebenfalls vorgesehen. Die Kardanwelle 31 verbindet den rechten mit dem linken Bereich der Vorrichtung 100, damit der bewegliche Teil 2 des Chassis jeweils nach rechts oder nach links verschoben werden kann, um diesen beweglichen Teil 2 des Chassis gegenüber der Beerenpflanze M jeweils optimal zu positionieren. Die Kardanwelle 30 verbindet ihrerseits den vorderen und den hinteren Bereich der Vorrichtung 100, damit jeweils beide Bereiche aneinander synchronisiert werden können. In der Tat ist es notwendig, dass sowohl der vordere als auch der hintere Bereich des beweglichen Teils 2 des Chassis gleichmässig verschoben werden, damit es zu keinen Deformationen kommt.

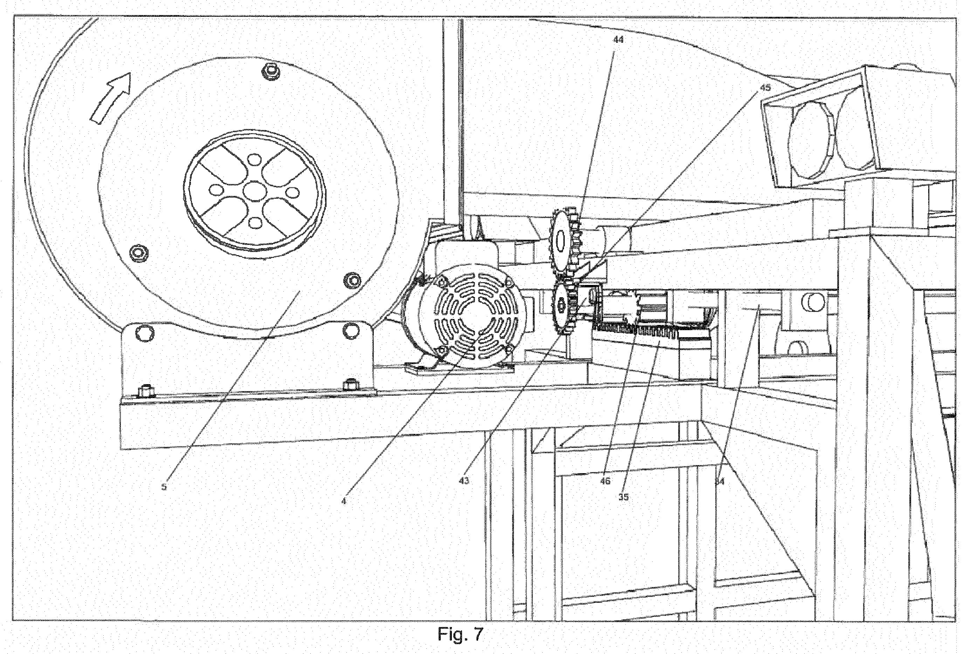

In Figur 7 ist ein Reduktor 43 sichtbar, welcher zum Beispiel ein Übersetzungsverhältnis von 1:30 aufweist, und welcher zusammen mit den Zahnrädern 44, 45 (welche ihrerseits zum Beispiel ein Verhältnis von 1:56 haben) eine synchronisierte Drehung und Verschiebung des beweglichen Teils 2 des Chassis zu bewerkstelligen. Zum Antrieb des Ausnivelliersystems ist ein eigener Antrieb 42 vorgesehen, welcher über einen Riemen 61 das Drehmoment an den Reduktor 43 und die Zahnräder 44, 45 überträgt. Das Ganze ist über einen Träger 38 über ein Gelenk mit dem unbeweglichen Teil 1 des Chassis verbunden, d.h. dieser kann sich in Bezug auf den unbeweglichen Teil 1 des Chassis drehen. Die Welle 34 dient ausserdem dazu, diesen Träger 38 mit dem beweglichen Teil 2 des Chassis zu verbinden.

In diesem Zusammenhang ist noch der Abstandhalter 51 zu erwähnen (s. Figur 4), welcher im unteren Bereich einen konstanten Abstand zwischen dem beweglichen Teil 2 und dem unbeweglichen Teil 1 des Chassis gewährleistet, damit die Auffangelemente 23 unabhängig von der relativen Ausrichtung des beweglichen Teils 2 des Chassis zum unbeweglichen Teil 1 des Chassis jeweils immer in der Mitte bleiben.

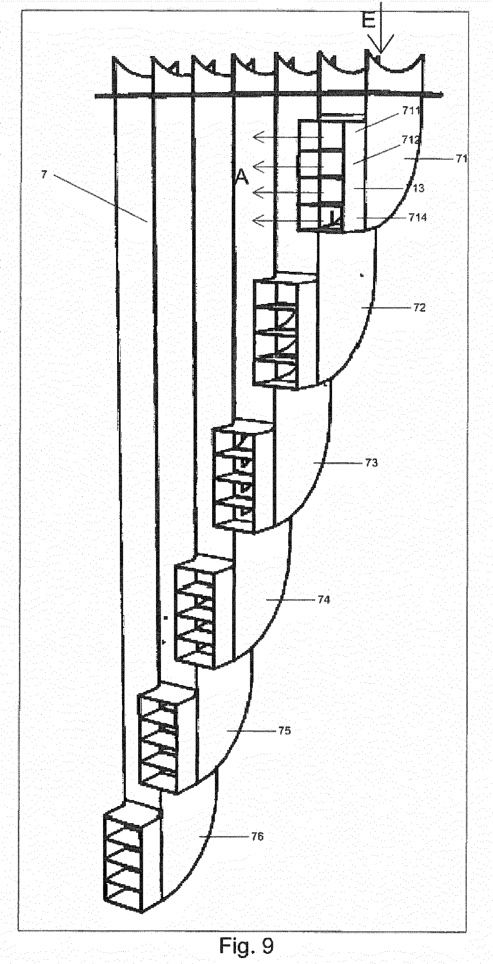

In Figur 9 wird das Luftdistributionssystem 7 in der erfindungsgemässen Vorrichtung für die Ernte von Beeren 100 dargestellt. Dieses Luftdistributionssystem 7umfasst sechs Segmente 71, 72, ..., 76, welche ihrerseits ebenfalls in jeweils vier Untersegmente 711, 712, ..., 721, 722, ..., 761, 762, ... unterteilt sind. Das erste Segment 71 ist das kürzeste, das nächste Segment 72 etwas länger, und so weiter bis zum letzten Segment 76, das das längste ist. Dank diesem Aufbau des Luftdistributionssystems 7 wird die einströmende Luft E in ganz viele kleinere Unterströme A aufgeteilt, welche jeweils einen anderen Bereich am Strauch avisieren. An dieser Stelle soll allerdings noch erwähnt werden, dass es selbstverständlich durchaus denkbar ist, mehr oder weniger als sechs Segmente 71, 72, ... 76 vorzusehen, und auch dass jedes dieser Segmente mehr oder weniger als vier Untersegmente 711, 712, ..., 721, 722, ..., 761, 762, ... umfasst. Wichtig ist allerdings, dass die gesamte Höhe des Sträucher durch die einzelnen Segmente und Untersegmente des Luftdistributionssystems 7 abgedeckt wird, so dass die Früchte unabhängig von ihrer jeweiligen Position am Strauch durch die Luftstösse gut erreicht werden können.

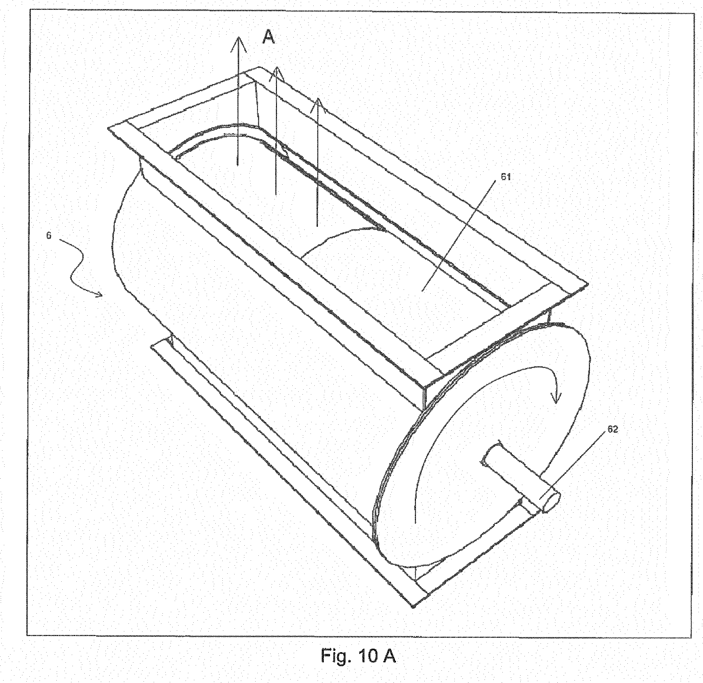

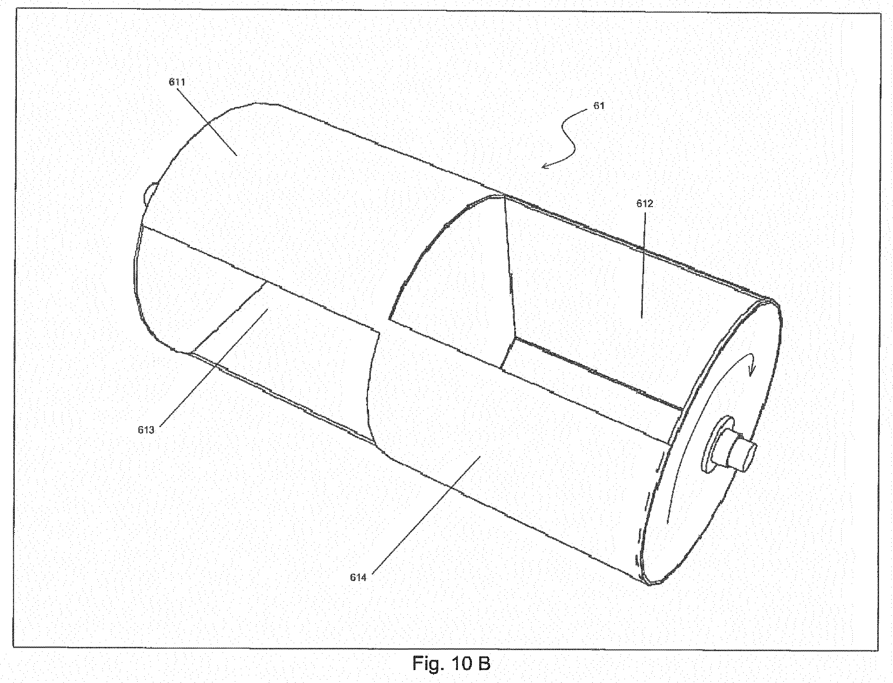

Wie bereits erwähnt wird der kontinuierliche Luftstrom durch einen Luftstossgenerator 6 in einen intermittierenden Luftstrom umgewandelt. Der Aufbau des Luftstossgenerators 6 wird in Figuren 10A und 10B dargestellt.

Spezifisch besteht der Luftstossgenerator 6 aus einem rotierenden Element 61, der über eine Welle 62 von aussen angetrieben wird. Das rotierende Element 61 umfasst jeweils offene 612, 613 und geschlossene 611, 614 Bereiche, welche sich in einem Zick-Zack-Muster um den Umfang des rotierenden Elements 61 erstrecken. In der Position des Luftstossgenerators 6, welche in Figur 10A dargestellt ist, wird der Luftstrom durch das rotierende Element 61 so abgeblockt, dass nur ein Teil des Stroms durch den Luftstossgenerator 6 fliessen kann, was durch die Pfeile A dargestellt ist. Wenn sich das rotierende Element 61 aber weiter dreht, dann schliesst sich langsam der Bereich an der linken Seite, da nach dem offenen Bereich ein geschlossener Bereich folgt, jedoch öffnet sich gleichzeitig der Bereich an der rechten Seite. Die kontinuierliche Rotation des rotierenden Elements 61 verursacht folglich eine intermittierende Strömung auf der linken und auf der rechten Seite des Luftstossgenerators 6, welche dann durch das Luftdistributionssystem 7 weiterverwendet werden kann, um die reifen Früchte zu ernten.

Zum Schluss sei darauf hingewiesen, dass die hier beispielhaft beschriebenen Ausführungsformen der erfindungsgemässen Vorrichtung für die Ernte von Beeren 100 nur eine Auswahl an möglichen Realisierungen des erfindungsgemässen Gedanken darstellen und keines Falls als Limitierungen angeschaut werden sollen. Der Fachmann wird daher verstehen, dass andere Implementierungen der Erfindung möglich sind, ohne dass die wesentlichen Merkmale der Erfindung vernachlässigt werden.

## Patentansprüche

1. Vorrichtung für die Ernte von Beeren (100), umfassend Mittel (5, 6, 7) zum Abtrennen der Beeren von Beerenpflanzen (M), Mittel (23) zum Auffangen der abgetrennten Beeren und Mittel (52) zum Transportieren der Beeren bis zu einem Aufbewahrungsmittel,
**dadurch gekennzeichnet,**
**dass** Mittel zum Abtrennen der Beeren von Beerenpflanzen einen Luftstromgenerator (5), einen Luftstossgenerator (6) und ein Luftdistributionssystem (7) umfasst, wobei der durch den Luftstromgenerator (5) generierte kontinuierliche Luftstrom mittels des Luftstossgenerators (6) in einen intermittierenden Luftstrom umwandelbar ist, und wobei dieser intermittierende Luftstrom mittels des Luftdistributionssystems (7) derart verteilbar ist, dass die Beeren über die ganze Höhe der Beerenpflanze (M) dem intermittierenden Luftstrom unterziehbar sind.

2. Vorrichtung für die Ernte von Beeren gemäss Anspruch 1, **dadurch gekennzeichnet, dass** der Luftstromgenerator (6) ein rotierendes Element (61) umfasst, welches jeweils offene Bereiche (612, 613) und geschlossene Bereiche (611, 614) umfasst, welche sich in einem Zick-Zack-Muster um den Umfang des rotierenden Elements (61) erstrecken.

3. Vorrichtung für die Ernte von Beeren gemäss Anspruch 1 oder 2, **dadurch gekennzeichnet, dass** das Luftdistributionssystem (7) mindestens zwei Segmente (71, 72, ..., 76) umfasst, wobei sich die Austrittsöffnungen der mindestens zwei Segmente (71, 72, ..., 76) im Wesentlichen über die gesamte Höhe der Vorrichtung (100) erstrecken.

4. Vorrichtung für die Ernte von Beeren gemäss Anspruch 3, **dadurch gekennzeichnet, dass** jedes Segment (71, 72, ..., 76) in mindestens zwei Untersegmente (711, 712, ..., 721, 722, ..., 761, 762, ...) unterteilt ist, wobei sich die Austrittsöffnungen der mindestens zwei Untersegmente (711, 712, ..., 721, 722, ..., 761, 762, ...) eines Segments (71, 72, ..., 76) im Wesentlichen über die gesamte Höhe der Austrittsöffnungen des entsprechenden Segments (71, 72, ..., 76) erstrecken.

5. Vorrichtung für die Ernte von Beeren gemäss einem der Ansprüche 1 bis 4, **dadurch gekennzeichnet, dass** die Vorrichtung ein Ausnivellierungssystem umfasst, mittels welchem die relative Position des Luftdistributionssystems (7) gegenüber der Pflanze (M) konstant gehalten werden kann.
